# FASCICULE DE BREVET EUROPEEN

(11) **EP 3 150 427 B1**
(45) Date de publication et mention de la délivrance du brevet: **10.01.2018**
(21) Numéro de dépôt: 15306549.5
(22) Date de dépôt: 01.10.2015
(51) Int. Cl.: B60P 3/00, B60P 7/10

(54) **SYSTEME D'IMMOBILISATION REVERSIBLE D'UN MOYEN DE MAINTIEN D'UN MUR PREFABRIQUE SUR UN SUPPORT D'UN DISPOSITIF DE TRANSPORT**
REVERSIBLES BLOCKIERSYSTEM EINES HALTEMITTELS EINER VORGEFERTIGTEN MAUER AUF EINER HALTERUNG EINER TRANSPORTVORRICHTUNG
SYSTEM FOR REVERSIBLE IMMOBILISATION OF A MEANS FOR HOLDING A PREFABRICATED WALL ON A MOUNTING OF A TRANSPORT DEVICE

(43) Date de publication de la demande: 05.04.2017
(73) Titulaire: FEHR Groupe, 67110 Reichshoffen (FR)
(72) Inventeur: FEHR, Pierre, 67500 HAGUENAU (FR)
(74) Mandataire: Faetibold, Emmanuel

(56) Documents cités:
- WO-A1-01/92056
- FR-A1- 2 904 614
- US-A1- 2009 245 988

## Description

La présente invention a trait à un système d'immobilisation réversible, sur un support d'un dispositif de transport d'au moins un mur préfabriqué, d'un moyen de maintien d'un tel mur préfabriqué en position verticale. L'invention a, également, trait à un dispositif de transport comportant au moins un tel système d'immobilisation réversible.

L'invention concerne le domaine du bâtiment et, plus particulièrement, celui de la fabrication des dispositifs pour le transport de murs préfabriqués, ceci entre l'usine de fabrication d'un tel mur préfabriqué et le chantier sur lequel il sera implanté. Un système ayant les caractéristiques du préambule de la revendication 1 est connu de la publication de demande de brevet d'invention FR 2 904 614 A1. L'on connait, d'ores et déjà, de tels dispositifs de transport qui comportent un moyen de réception d'au moins un tel mur préfabriqué, un tel moyen de réception comportant un châssis (notamment résultant de l'assemblage de profilés) et/ou un plateau (notamment surmontant un tel châssis). Un tel dispositif de transport comporte, encore, un support s'étendant verticalement à partir d'une extrémité dudit moyen de réception. Un tel dispositif de transport comporte, également, au moins un moyen de maintien pour maintenir un mur préfabriqué en position verticale. Ce dispositif de transport peut être complété par des moyens de montage en déplacement pour monter en déplacement le ou les moyens de maintien par rapport à ce support. De tels moyens de montage en déplacement comportent, d'une part, au moins une coulisse que comporte ledit support et, d'autre part, au moins une tige, que comportent le ou les moyens de maintien, qui traverse la ou les coulisses, et qui coulisse à l'intérieur de cette ou ces coulisses. En fait, cette ou ces tiges sont de type fileté et sont complétées par un écrou (éventuellement encore par une rondelle). Par actionnement de cet écrou, selon le cas, on procède à l'immobilisation du moyen de maintien par rapport au support ou on libère ce moyen de maintien pour en autoriser le déplacement par rapport à ce support.

En fait, l'actionnement d'un tel écrou nécessite, pour un opérateur, de disposer sur soi d'un outil d'actionnement (usuellement une clé, notamment plate, à molette ou analogue) qui plus est d'un outil d'actionnement qui présente des caractéristiques appropriées et spécifiques (plus particulièrement l'ouverture) pour coopérer avec un tel écrou.

De plus, ces dispositifs de transport comportent, usuellement, une pluralité de moyens de maintien qui comportent, chacun, une pluralité de tiges filetées et, par conséquent, une pluralité d'écrous. Aussi, lors de la mise en place des murs préfabriqués sur un tel dispositif de transport ou du retrait de ces murs préfabriqués, il convient de déplacer une pluralité de moyens de maintien ce qui nécessite d'actionner un grand nombre d'écrous, ceci de manière manuelle et à l'aide d'un outil d'actionnement approprié. Une telle opération s'avère particulièrement fastidieuse et contraignante.

La présente invention se veut de remédier aux inconvénients des dispositifs de transport de l'état de la technique.

A cet effet, l'invention concerne un système d'immobilisation réversible, sur un support d'un dispositif de transport d'au moins un mur préfabriqué, d'un moyen de maintien d'un tel mur préfabriqué en position verticale. Ce système comporte :
- au moins une platine comportant un moyen de réception pour recevoir le moyen de maintien ;
- une embase, s'étendant selon un plan, comportant au moins un moyen d'appui pour prendre appui contre le support, et mobile par rapport à la platine ou aux platines ;
- au moins un moyen de serrage pour serrer, sur le support, l'embase et/ou le moyen de maintien, ceci sous l'effet d'un déplacement de l'embase par rapport à cette ou ces platines.

Une autre caractéristique consiste en ce que le ou les moyens de serrage comportent au moins un moyen de commande du déplacement de la ou des platines par rapport à l'embase pour, sous l'effet d'un déplacement de l'embase selon une direction parallèle au plan selon lequel s'étend cette embase, commander le déplacement de cette ou ces platines selon une direction perpendiculaire à ce plan selon lequel s'étend l'embase.

En fait, l'embase comporte au moins une surface et la ou les platines comportent une surface qui coopère avec la ou les surfaces de l'embase tandis que la ou les surfaces de l'embase et/ou de la ou des platines, d'une part, s'étendent selon un plan formant un angle non nul avec le plan selon lequel s'étend l'embase et, d'autre part, constituent, au moins en partie, le ou les moyens de commande du déplacement.

Encore une autre caractéristique consiste en ce que le moyen de réception que comportent la ou les platines comporte un trou traversant.

De plus, le système comporte au moins un moyen de verrouillage pour verrouiller l'embase par rapport à la platine ou aux platines, ceci dans une position active ou (et de préférence) dans une position inactive d'immobilisation du moyen de maintien.

Une caractéristique additionnelle consiste en ce que l'embase comporte, soit au moins un moyen d'actionnement pour actionner le ou les moyens de serrage, soit au moins un moyen de réception pour recevoir ce ou ces moyens d'actionnement.

L'invention concerne, également, un dispositif de transport d'au moins un mur préfabriqué comportant au moins une plaque de béton ou analogue. Ce dispositif de transport comporte :
- un moyen de réception pour recevoir le ou les murs préfabriqués ;
- au moins un moyen de maintien pour maintenir ce ou ces murs préfabriqués en position verticale ;
- un support ainsi que des moyens de montage en déplacement pour monter en déplacement ce ou ces moyens de maintien par rapport à ce support ;
- au moins un système d'immobilisation réversible selon l'une quelconque des revendications précédentes.

Ainsi, le système d'immobilisation réversible comporte au moins un moyen de serrage pour serrer, sur le support, l'embase et/ou le moyen de maintien, ceci sous l'effet d'un déplacement de l'embase par rapport à cette ou ces platines.

Il en résulte que l'actionnement de ce ou de ces moyens de serrage (sous l'effet d'un déplacement de l'embase) entraîne le serrage, sur le support, de l'embase et/ou du moyen de maintien. Un tel serrage se traduit par une immobilisation, par rapport au support, de l'embase et/ou du moyen de maintien.

L'actionnement de ce ou de ces moyens de serrage (sous l'effet d'un déplacement de l'embase mais dans une direction opposée) entraîne, par contre, le desserrage, par rapport au support, de l'embase et/ou du moyen de maintien. Un tel desserrage se traduit par une libération, par rapport au support, de l'embase et/ou du moyen de maintien qu'il est, alors, possible de déplacer.

Ainsi, l'actionnement de ce ou de ces moyens de serrage est assuré sous l'effet d'un déplacement (plus particulièrement en translation) de l'embase ce qui simplifie considérablement les opérations d'immobilisation ou de libération du ou des moyens de maintien, plus particulièrement par rapport à l'actionnement d'un écrou à l'aide d'un outil spécifique comme pour les dispositifs de transport de l'état de la technique.

De plus, un tel système d'immobilisation réversible peut comporter une embase, une pluralité de platines (par rapport auxquelles ladite embase est mobile et recevant chacune une tige que peut comporter un même moyen de maintien) ainsi qu'une pluralité de moyens de serrage (chacun associé à une de ces platines). Le déplacement de l'embase permet, alors, d'actionner en même temps l'ensemble des moyens de serrage, que comporte le système d'immobilisation, et qui sont associés à l'ensemble des platines recevant l'ensemble des tiges que comporte un même moyen de maintien. Ainsi, uniquement par le déplacement de l'embase, il est assuré l'immobilisation ou la libération du moyen de maintien par rapport au support.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux dessins joints en annexe et dans lesquels :

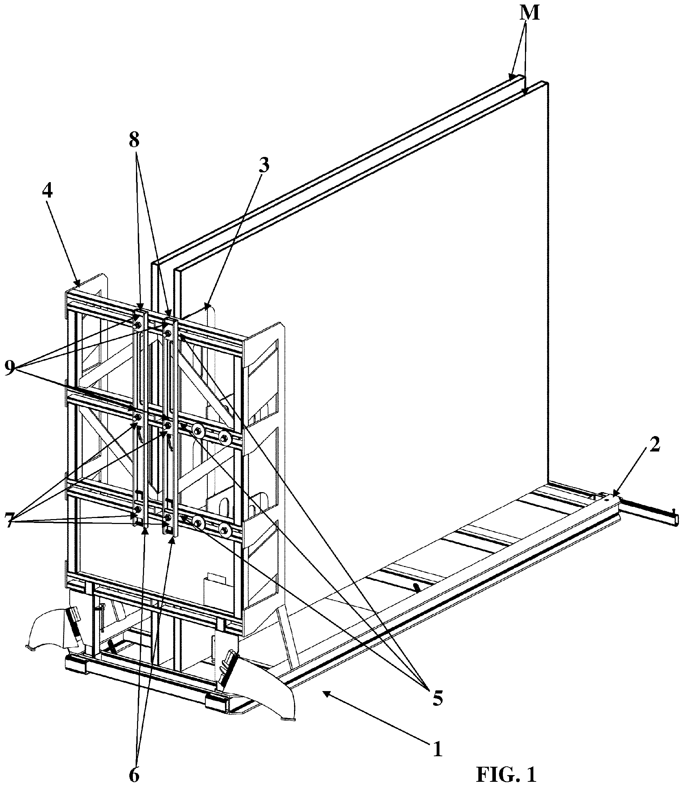

- la figure 1 est une vue schématisée et en perspective d'un dispositif de transport conforme à l'invention ;

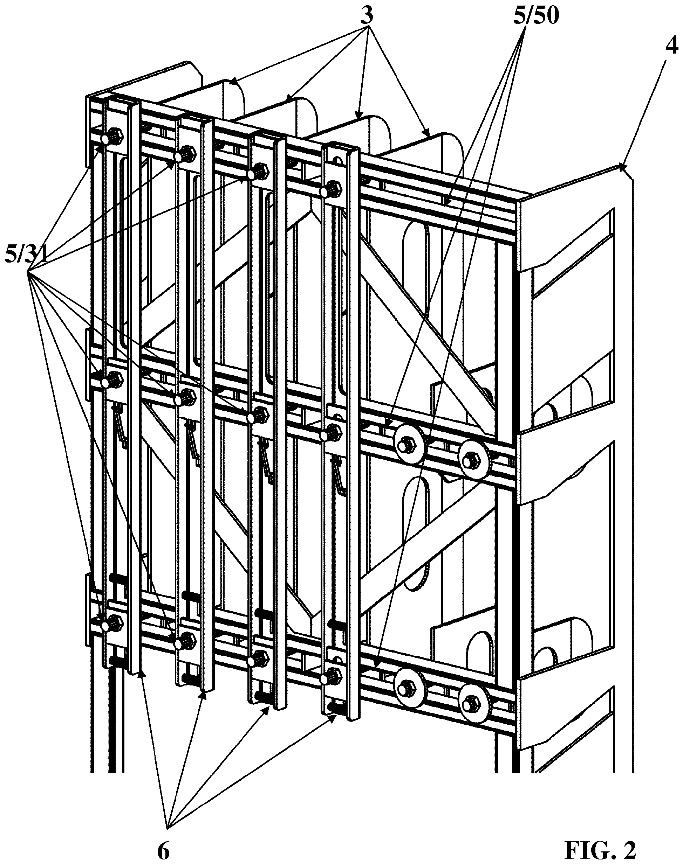

- la figure 2 est une vue schématisée correspondant à un détail du dispositif de transport illustré figure 1 ;

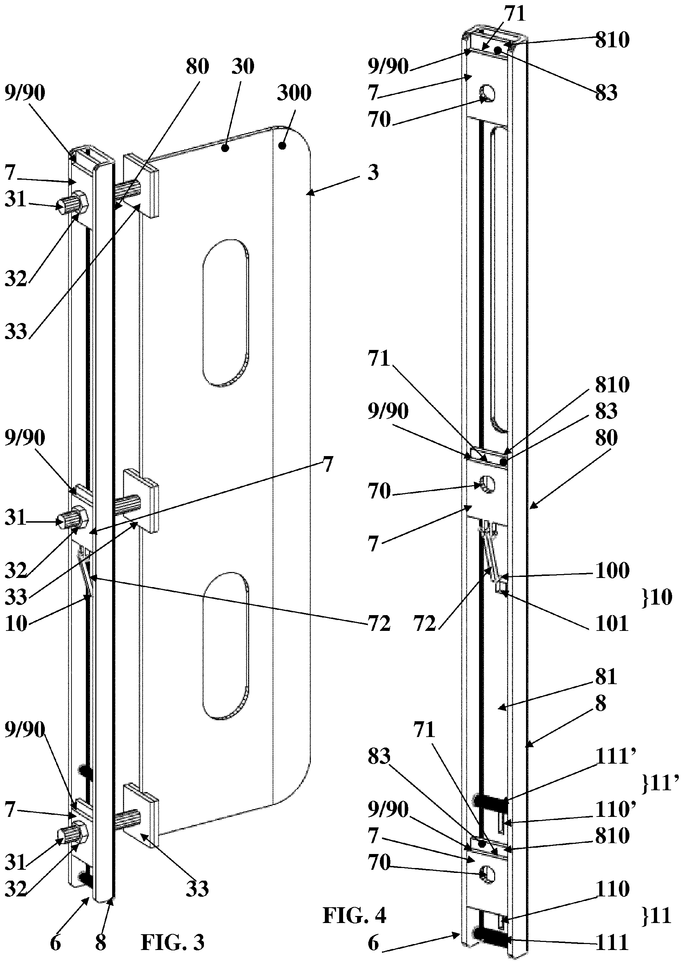

- la figure 3 est une vue schématisée et en perspective d'un système d'immobilisation réversible conforme à l'invention, que comporte le dispositif de transport des figures 1 et 2, et qui adopte une position active de serrage des moyens de serrage (donc une position d'immobilisation d'un moyen de maintien);
- la figure 4 est une vue similaire à la figure 3 et correspond à un ensemble constitué par le système d'immobilisation et par un moyen de maintien, ceci en position active de serrage des moyens de serrage ;

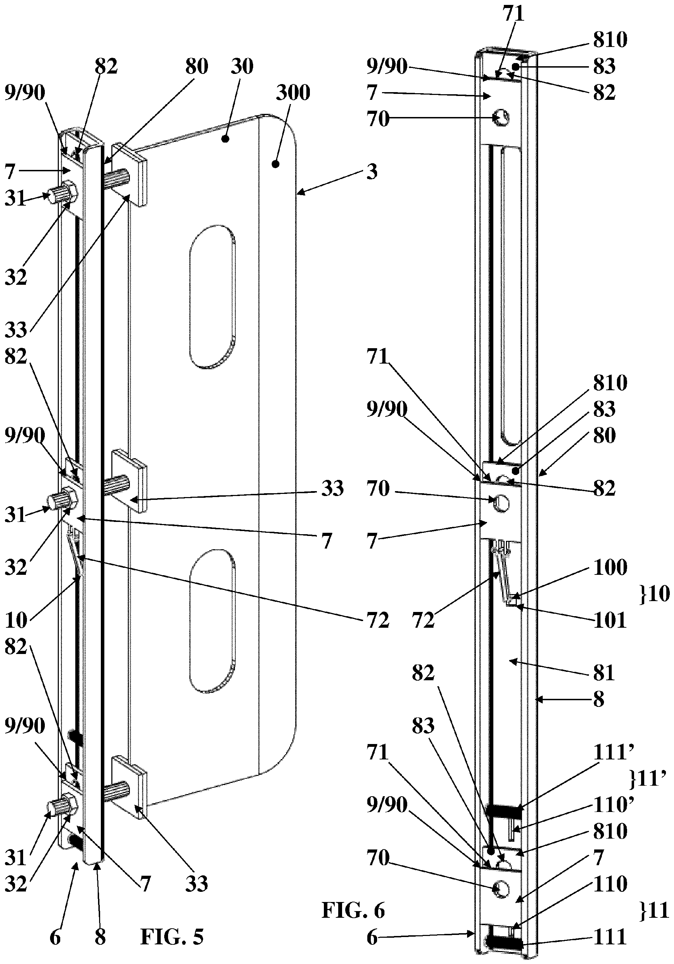

- la figure 5 est une vue schématisée d'un système d'immobilisation réversible conforme à l'invention, que comporte le dispositif de transport des figures 1 et 2, et qui adopte une position inactive de serrage des moyens de serrage (donc une position de libération d'un moyen de maintien) ;
- la figure 6 est une vue similaire à la figure 5 et correspond à un ensemble constitué par le système d'immobilisation et par un moyen de maintien, ceci en position inactive de serrage des moyens de serrage.

La présente invention concerne le domaine du bâtiment et, plus particulièrement, celui de la fabrication des dispositifs pour le transport de murs préfabriqués, ceci entre l'usine de fabrication d'un tel mur préfabriqué et le chantier sur lequel il sera implanté.

En fait, un tel mur préfabriqué M comporte au moins une plaque de béton ou analogue, voire deux plaques de béton (ou analogue) parallèles et raccordées entre elles par des moyens de raccordement (plus particulièrement sous la forme de connecteurs, de corbeilles, de poutrelles ou analogue).

En ce qui concerne ledit dispositif de transport 1, celui-ci comporte un moyen de réception 2 pour recevoir le ou les murs préfabriqués M. Un tel moyen de réception 2 adopte la forme d'un châssis (notamment résultant de l'assemblage de profilés) et/ou d'un plateau (notamment surmontant un tel châssis).

Ce dispositif de transport 1 comporte, également, au moins un moyen de maintien 3 pour maintenir ce ou ces murs préfabriqués M en position verticale.

Un tel moyen de maintien 3 comporte une plaque plane 30 ou analogue, plus particulièrement de type amovible, notamment réalisée en un matériau métallique. Une telle plaque plane 30 présente une faible épaisseur permettant, avantageusement, d'interposer une telle plaque plane 30 entre deux murs juxtaposés M tout en préservant la capacité maximale de chargement du dispositif 1. On observera qu'une telle plaque 30 peut être complétée, au niveau de chacune de ses surfaces destinées à prendre appui contre un tel mur préfabriqué M, par au moins un moyen de protection 300 de ce mur M contre lequel cette plaque plane 30 va prendre appui. Un tel moyen de protection peut être constitué par au moins une cale de protection ou analogue (notamment en caoutchouc), voire encore par un revêtement (plus particulièrement en caoutchouc) appliqué (notamment par vulcanisation) sur une partie au moins d'une telle plaque plane 30.

Un tel moyen de maintien 3 comporte, aussi, au moins une tige 31 s'étendant à partir de la plaque plane 30, plus particulièrement à partir d'une extrémité latérale de cette plaque plane 30. En fait et tel que visible sur les figures en annexe, un tel moyen de maintien 3 comporte, de préférence, une pluralité de ces tiges 31, qui s'étendent à partir de la plaque plane 30, et qui sont sensiblement alignées.

Le ou les moyens de maintien 3 comportent, alors également, au moins une butée d'arrêt 32 associée à une tige 31. En fait et tel que visible sur les figures en annexe, un tel moyen de maintien 3 comporte, de préférence, une pluralité de tiges 31 ainsi qu'une pluralité de ces butées d'arrêt 32, chacune associée à une telle tige 31.

Selon un mode de réalisation préféré, d'une part, la ou les tiges 31 sont de type fileté et, d'autre part, la ou les butées d'arrêt 32 sont constituées par un écrou vissé sur une telle tige filetée 31.

Un tel moyen de maintien 3 comporte, aussi, au moins un moyen d'appui 33, voire (et de préférence) une pluralité de ces moyens d'appui 33. Un tel moyen d'appui 33 sera décrit plus en détail ci-dessous

Le dispositif de transport 1 comporte, encore, au moins un support 4 s'étendant verticalement à partir dudit moyen de réception 2, plus particulièrement à partir d'une extrémité de ce moyen de réception 2.

Ledit dispositif de transport 1 comporte, de plus, des moyens de montage en déplacement 5 pour monter en déplacement le ou les moyens de maintien 3 par rapport à ce support 4.

De tels moyens de montage en déplacement 5 comportent, d'une part, au moins une coulisse 50 que comporte ledit support 4 et, d'autre part, la ou les tiges 31, que comportent le ou les moyens de maintien 3, et qui coulissent à l'intérieur de la ou des coulisses 50.

En fait et selon un mode de réalisation préféré de l'invention, les moyens de montage en déplacement 5 comportent, d'une part, une pluralité de coulisses 50 que comporte ledit support 4 et, d'autre part, une pluralité de tiges 31, que comportent le ou les moyens de maintien 3, et qui coulissent chacune à l'intérieur de l'une des coulisses 50 du support 4.

En fait, ces coulisses 50 sont, de préférence, parallèles tandis que les tiges 31 d'un moyen de maintien 3 coulissent, chacune, dans une des coulisses 50 du support 4.

Finalement, le dispositif de transport 1 comporte au moins un système d'immobilisation réversible 6 conçu pour assurer une immobilisation réversible, sur le support 4 du dispositif de transport 1 d'au moins un mur préfabriqué M, du ou d'un des moyen de maintien 3 d'un tel mur préfabriqué M en position verticale.

Selon un mode préféré de réalisation, un tel dispositif de transport 1 comporte une pluralité de ces systèmes d'immobilisation réversible 6. En fait, un tel dispositif de transport 1 comporte, d'une part, une pluralité de moyens de maintien 3 et, d'autre part, une pluralité de systèmes d'immobilisation réversible 6, plus particulièrement autant de systèmes d'immobilisation réversible 6 que de moyens de maintien 3, ceci en sorte que chaque moyen de maintien 3 soit associé à un des systèmes d'immobilisation réversible 6 pour en assurer une immobilisation réversible.

Un tel système d'immobilisation réversible 6 comporte :
- au moins une platine 7 comportant un moyen de réception 70 pour recevoir le moyen de maintien 3;
- une embase 8, s'étendant selon un plan, comportant au moins un moyen d'appui 80 pour prendre appui contre le support 4, et mobile par rapport à la platine 7 ou aux platines 7;
- au moins un moyen de serrage 9 pour serrer, sur le support 4, l'embase 8 et/ou le moyen de maintien 3, ceci sous l'effet d'un déplacement de l'embase 8 par rapport à cette ou ces platines 7.

En fait et selon un mode de réalisation préféré illustré sur les figures en annexe, un tel système d'immobilisation réversible 6 comporte, d'une part, une pluralité de platines 7 par rapport auxquelles l'embase 8 est mobile et, d'autre part, une pluralité de moyens de serrage 9, chacun associé à une des platines 7 et conçu pour assurer le serrage, sur le support 4, de l'embase 8 et/ou du moyen de maintien 3.

Tel que mentionné ci-dessus, le ou les systèmes d'immobilisation réversible 6 comportent, chacun, au moins une platine 7 comportant un moyen de réception 70 pour recevoir le moyen de maintien 3.

A ce propos, on observera que le moyen de réception 70, que comportent la ou les platines 7, comporte un trou traversant.

En fait, le moyen de réception 70, que comportent la ou les platines 7 du ou des systèmes d'immobilisation réversible 6, reçoit la tige 31 ou une des tiges 31 du ou des moyens de maintien 3. Une telle tige 31 traverse, alors, le trou traversant que comporte un tel moyen de réception 70.

Dans le cas particulier d'un dispositif de transport 1 comportant, d'une part, un ou plusieurs moyens de maintien 3 et, d'autre part, un ou plusieurs systèmes d'immobilisation réversible 6 comportant chacun une pluralité de platines 7, le moyen de réception 70, que comportent les platines 7 de ce ou de ces systèmes d'immobilisation réversibles 6, reçoit une des tiges 31 du ou des moyens de maintien 3.

Tel que mentionné ci-dessus, ce ou ces moyens de maintien 3 comportent, également, au moins une butée d'arrêt 32 qui est, alors, destinée à coopérer avec la ou les platines 7 du ou des systèmes d'immobilisation réversibles 6, plus particulièrement en prenant appui contre une telle platine 7.

Tel que susmentionné, le ou les systèmes d'immobilisation réversible 6 comportent une embase 8 laquelle comporte au moins un moyen d'appui 80 pour prendre appui contre le support 4.

En fait, une telle embase 8 comporte, de préférence une pluralité de ces moyens d'appui 80.

Tel que mentionné ci-dessus, le dispositif de transport 1 comporte au moins un moyen de maintien 3, un tel moyen de maintien 3 comportant au moins un moyen d'appui 33 qui est, en fait, conçu pour prendre appui contre le support 4.

A ce propos, on observera que le ou les moyens de maintien 3 comportent, alors, au moins ledit moyen d'appui 33 qui prend appui contre un côté du support 4 (plus particulièrement contre un côté d'une des coulisses 50 des moyens de montage en déplacement 5) tandis que le ou les moyens d'appui 80, que comporte l'embase 8 du ou des systèmes d'immobilisation réversible 6, prennent appui contre un autre côté du support 4, opposé à celui contre lequel prennent appui le ou les moyens d'appui 33 que comportent le ou les moyens de maintien 3 (plus particulièrement contre un autre côté de ladite coulisse 50 des moyens de montage en déplacement 5).

Un mode particulier de réalisation consiste en ce que le ou les moyens de maintien 3 comportent une pluralité de moyens d'appui 33 pour prendre appui contre un côté du support 4 (plus particulièrement pour prendre appui, chacun, contre un côté d'une des coulisses 50 des moyens de montage en déplacement 5) tandis que les moyens d'appui 80 que comporte l'embase 8 du ou des systèmes d'immobilisation réversible 6 prennent appui contre un autre côté de ce support 4, opposé à celui contre lequel prennent appui les moyens d'appui 33 que comportent le ou les moyens de maintien 3 (plus particulièrement pour prendre appui, chacun, contre un autre côté de ladite coulisse 50 des moyens de montage en déplacement 5).

Il en résulte que le support 4 est interposé entre, d'une part, le ou les moyens d'appui 33 que comportent le ou les moyens de maintien 3 et, d'autre part, le ou les moyens d'appui 80 que comporte l'embase 8 du ou des systèmes d'immobilisation réversible 6.

Cette caractéristique permet, alors, avantageusement, le serrage, sur ce support 4, de l'embase 8 et/ou du moyen de maintien 3, ceci sous l'effet du déplacement de l'embase 8 par rapport à la platine 7 ou aux platines 7.

Une autre caractéristique de l'embase 8 consiste en ce qu'elle comporte une plaque 81 s'étendant selon un plan selon lequel s'étend également l'embase 8. Cette plaque 81 comporte, d'un côté, le ou les moyens d'appui 80 contre le support 4.

Une caractéristique additionnelle consiste en ce que l'embase 8 comporte au moins une coulisse, d'une part, recevant intérieurement la ou les platines 7 et, d'autre part, qui est mobile par rapport à cette ou ces platines 7. En fait, une telle coulisse adopte une section en « U » tandis que le fond d'une telle coulisse est constitué par la plaque 81 de l'embase 8.

Un mode particulier de réalisation illustré sur les figures en annexe consiste en ce que l'embase 8 comporte une unique coulisse, recevant intérieurement la ou les platines 7, et mobile par rapport à cette ou ces platines 7.

Encore une autre caractéristique consiste en ce que l'embase 8 (plus particulièrement la plaque 81 que comporte cette embase 8) comporte au moins un moyen de réception 82 pour recevoir le moyen de maintien 3, plus particulièrement la ou les tiges 31 que comporte un tel moyen de maintien 3.

En fait, un tel moyen de réception 82 adopte la forme d'un trou traversant au moins en partie positionné en regard du trou traversant du ou des moyens de réception 70 que comportent la ou les platines 7.

En fait, le trou traversant des moyens de réception 82 de l'embase 8 et/ou le trou traversant des moyens de réception 70 de la ou des platines 7 adoptent une forme oblongue, ceci de manière à autoriser un déplacement de l'embase 8 par rapport à cette ou ces platines 7 conformément à une direction parallèle au plan selon lequel s'étend cette embase 8.

Tel que mentionné ci-dessus, le système d'immobilisation réversible 6 comporte au moins un moyen de serrage 9 pour serrer, sur le support 4, l'embase 8 et/ou le moyen de maintien 3, ceci sous l'effet d'un déplacement de l'embase 8 par rapport à cette ou ces platines 7.

A ce propos, on observera que ce ou des moyens de serrage 9 comportent au moins un moyen de commande du déplacement 90 de la ou des platines 7 par rapport à l'embase 8 pour, sous l'effet d'un déplacement de l'embase 8 selon une direction parallèle au plan selon lequel s'étend cette embase 8, commander le déplacement de cette ou ces platines 7 selon une direction perpendiculaire à ce plan selon lequel s'étend l'embase 8.

A ce propos, on observera que l'embase 8 comporte au moins une surface 83 et que la ou les platines 7 comportent une surface 71 qui coopère avec la ou les surfaces 83 de l'embase 8 tandis que la ou les surfaces (83 ; 71) de l'embase 8 et/ou de la ou des platines 7, d'une part, s'étendent selon un plan formant un angle non nul avec le plan selon lequel s'étend l'embase 8 et, d'autre part, constituent, au moins en partie, le ou les moyens de commande du déplacement 90.

Tel que mentionné ci-dessus, l'embase 8 comporte ladite plaque 81 s'étendant selon le plan selon lequel s'étend l'embase 8. Cette plaque 81 comporte, d'une part et d'un côté de cette plaque 81 orienté en direction de la ou des platines 7, la ou les surfaces 83 de l'embase 8 qui coopèrent avec la ou les surfaces 71 de la ou des platines 7 et, d'autre part et de l'autre côté de cette plaque 81 (destiné à être orienté dans une direction opposée par rapport à la platine 7 ou aux platines 7), le ou les moyens d'appui 80 contre le support 4 comme mentionné ci-dessus.

Un mode préféré de réalisation consiste en ce que la ou les surfaces 83 de l'embase 8 (et que comporte ladite plaque 81) constituent, au moins en partie, le ou les moyens de commande du déplacement 90.

Encore une autre caractéristique consiste en ce que la plaque 81 de l'embase 8 comporte, du côté orienté en direction de la ou des platines 7, au moins un sabot 810, d'une part, faisant saillie par rapport à la surface de cette plaque 81 et s'étendant en direction de la ou des platines 7 et, d'autre part, comportant la ou les surfaces 83 de l'embase 8 qui coopèrent avec la ou les surfaces 71 de la ou des platines 7.

Un mode préféré de réalisation consiste en ce que le ou les sabots 810 comportent la ou les surfaces 83 de l'embase 8 qui constituent, au moins en partie, le ou les moyens de commande du déplacement 90.

Une autre caractéristique consiste, alors, en ce que ce ou ces sabots 810 comportent, également, le ou les moyens de réception 82, que comporte l'embase 8, et qui adoptent la forme du trou traversant présentant les caractéristiques décrites ci-dessus.

Une autre caractéristique du système d'immobilisation réversible 6 consiste en ce qu'il comporte au moins un moyen de verrouillage 10 pour verrouiller l'embase 8 par rapport à la platine 7 ou aux platines 7, ceci dans une position active ou (et de préférence) dans une position inactive d'immobilisation (donc de libération) du moyen de maintien 3.

En fait, ce ou ces moyens de verrouillage 10 comportent, d'une part, un moyen d'accrochage 100, que comportent la ou les platines 7, et qui est mobile par rapport à cette ou ces platines 7 (plus particulièrement entre une position active d'accrochage et au moins une position inactive d'accrochage) et, d'autre part, un moyen d'accrochage complémentaire 101, que comporte l'embase 8, et avec lequel coopère le moyen d'accrochage 100.

Tel que visible sur les figures en annexe, la ou les platines 7 comportent une poignée 72 présentant, d'une part, une première extrémité montée pivotante sur cette ou ces platines 7 et, d'autre part, une deuxième extrémité, opposée à la première extrémité, et comportant le moyen d'accrochage 100.

Un tel moyen d'accrochage 100 peut adopter la forme d'un doigt d'engagement. Quant au moyen d'accrochage complémentaire 101 que comporte l'embase 8 (plus particulièrement que comporte la plaque 81 de cette embase 8), celui-ci adopte la forme d'un trou débouchant (voire traversant) au moins à l'intérieur duquel (voire au travers duquel) est engagée le moyen d'accrochage 100 en position active de verrouillage.

Ladite poignée 72 est conçue pour être manipulée par un opérateur, ceci au moins pour amener ledit moyen d'accrochage 100 de la position inactive de verrouillage à la position active de verrouillage, voire inversement.

Encore une autre caractéristique consiste en ce que ce système d'immobilisation réversible 6 comporte des moyens de rappel du ou des moyens de verrouillage 10 en positon inactive ou (et de préférence) active de verrouillage.

Ces moyens de rappel sont, alors, plus particulièrement conçus pour rappeler ledit moyen d'accrochage 100 en position inactive ou (et de préférence) en position active d'accrochage avec ledit moyen d'accrochage complémentaire 101.

Une caractéristique additionnelle consiste en ce que l'embase 8 comporte, soit au moins un moyen d'actionnement pour actionner le ou les moyens de serrage 9 (donc pour entraîner en déplacement ladite embase 8), soit (et de préférence) au moins un moyen de réception (11 ; 11') pour recevoir ce ou ces moyens d'actionnement.

Selon un mode de réalisation préféré, un tel moyen d'actionnement adopte la forme d'un levier (plus particulièrement au moins en partie constitué par une barre) ou analogue.

Lorsque l'embase 8 comporte au moins un moyen de réception (11 ; 11') d'un tel levier, ce dernier est de type amovible. Un mode particulier de réalisation consiste, alors, en ce qu'un tel levier est rendu solidaire du support 4, notamment par l'intermédiaire d'une chaîne ou analogue.

En ce qui concerne ledit moyen de réception (11 ; 11'), celui-ci comporte un trou traversant (110 ; 110'), que comporte l'embase 8 (plus particulièrement que comporte la plaque 81 de cette embase 8), et au travers duquel est destiné à être engagé un tel moyen d'actionnement, plus particulièrement pour prendre appui sur le support 4.

Une tel moyen de réception (11 ; 11') peut, encore, comporter une butée d'arrêt (111 ; 111') contre laquelle est destiné à prendre appui ledit levier. Une telle butée d'arrêt (111 ; 111') s'étend entre les parois de la coulisse de l'embase 8 et/ou borde ledit trou traversant (110 ; 110').

En fait, selon un mode de réalisation préféré, l'embase 8 comporte au moins une paire de moyens de réception (11 ; 11'). Les deux moyens de réception (11 ; 11') d'une telle paire de moyens de réception (11 ; 11') sont, alors, positionnés de part et d'autre de la ou des platines 7.

A ce propos, on observera que l'un 11 de ces moyens de réception (11 ; 11') est mis à profit pour assurer un serrage, sur le support 4, de l'embase 8 et/ou du moyen de maintien 3, ceci sous l'effet d'un déplacement de l'embase 8 par rapport à cette ou ces platines 7 dans une première direction.

L'autre 11' de ces moyens de réception (11 ; 11') est mis à profit pour assurer un desserrage, du support 4, de l'embase 8 et/ou du moyen de maintien 3, ceci sous l'effet d'un déplacement de l'embase 8 par rapport à cette ou ces platines 7 dans une deuxième direction, opposée à la première direction.

Finalement, une autre caractéristique consiste en ce qu'au moins une partie du système d'immobilisation réversible 6 peut être réalisé en un matériau tel que de l'acier, du tétra-fluoroéthylène (plus connu sous la marque déposée téflon), du béton fibré à ultra hautes performances (notamment connu sous la marque déposée ductal) ou autre. En particulier, la ou les platines 7 et/ou l'embase 8 et/ou la ou les moyens de serrage 9 (en particulier le ou les moyens de commande du déplacement 90) et/ou les moyens de verrouillages 10 (en particulier le ou les moyens d'accrochage 100 et/ou le ou les moyens d'accrochage complémentaires 101) et/ou le levier 72 et/ou le ou les moyens de réception (11, 11') du levier (en particulier la ou les butées d'arrêt 111 ; 111') peuvent être réalisés (au moins en partie) en un tel matériau.

En ce qui concerne le dispositif de transport 1, celui-ci comporte, outre les caractéristiques décrites ci-dessus, au moins un système d'immobilisation réversible 6 (voire une pluralité de systèmes d'immobilisation réversible 6) présentant les caractéristiques décrites ci-dessus.

## Revendications

1. Système d'immobilisation réversible (6), sur un support (4) d'un dispositif de transport (1) d'au moins un mur préfabriqué (M), d'un moyen de maintien (3) d'un tel mur préfabriqué (M) en position verticale, ce système (6) comportant :
- au moins une platine (7) comportant un moyen de réception (70) pour recevoir le moyen de maintien (3) ;
- une embase (8), s'étendant selon un plan, comportant au moins un moyen d'appui (80) pour prendre appui contre le support (4), et mobile par rapport à la platine (7) ou aux platines (7);
- au moins un moyen de serrage (9) pour serrer, sur le support (4), l'embase (8) et/ou le moyen de maintien (3),
**caractérisé en ce que** le moyen de serrage (9) serre le moyen de maintien (3) sur le support (4) sous l'effet d'un déplacement de l'embase (8) par rapport à cette ou ces platines (7).

2. Système d'immobilisation réversible (6), selon la revendication 1, **caractérisé par le fait qu'**il comporte, d'une part, une pluralité de platines (7) par rapport auxquelles l'embase (8) est mobile et, d'autre part, une pluralité de moyens de serrage (9), chacun associé à une des platines (7) et conçu pour assurer le serrage, sur le support (4), de l'embase (8) et/ou du moyen de maintien (3).

3. Système d'immobilisation réversible (6), selon l'une quelconque des revendications précédentes, **caractérisé par le fait que** le ou les moyens de serrage (9) comportent au moins un moyen de commande du déplacement (90) de la ou des platines (7) par rapport à l'embase (8) pour, sous l'effet d'un déplacement de l'embase (8) selon une direction parallèle au plan selon lequel s'étend cette embase (8), commander le déplacement de cette ou ces platines (7) selon une direction perpendiculaire à ce plan selon lequel s'étend l'embase (8).

4. Système d'immobilisation réversible (6), selon la revendication 3, **caractérisé par le fait que** l'embase (8) comporte au moins une surface (83) et que la ou les platines (7) comportent une surface (71) qui coopère avec la ou les surfaces (83) de l'embase (8) tandis que la ou les surfaces (83 ; 71) de l'embase (8) et/ou de la ou des platines (7), d'une part, s'étendent selon un plan formant un angle non nul avec le plan selon lequel s'étend l'embase (8) et, d'autre part, constituent, au moins en partie, le ou les moyens de commande du déplacement (90) .

5. Système d'immobilisation réversible (6), selon la revendication 4, **caractérisé par le fait que** l'embase (8) comporte une plaque (81) s'étendant selon le plan selon lequel s'étend l'embase (8) et comportant, d'une part et d'un côté de cette plaque (81) orienté en direction de la ou des platines (7), la ou les surfaces (83) de l'embase (8) qui coopèrent avec la ou les surfaces (71) de la ou des platines (7) et, d'autre part et de l'autre côté de cette plaque (81), le ou les moyens d'appui (80) contre le support (4).

6. Système d'immobilisation réversible (6), selon la revendication 5, **caractérisé par le fait que** la plaque (81) comporte, du côté orienté en direction de la ou des platines (7), au moins un sabot (810), d'une part, faisant saillie par rapport à la surface de cette plaque (81) et s'étendant en direction de la ou des platines (7) et, d'autre part, comportant la ou les surfaces (83) de l'embase (8) qui coopèrent avec la ou les surfaces (71) de la ou des platines (7).

7. Système d'immobilisation réversible (6), selon l'une quelconque des revendications précédentes, **caractérisé par le fait que** le moyen de réception (70) que comportent la ou les platines (7) comporte un trou traversant.

8. Système d'immobilisation réversible (6), selon la revendication 7, **caractérisé par le fait que** l'embase (8) comporte au moins un moyen de réception (82) pour recevoir le moyen de maintien(3), un tel moyen de réception (82) adoptant la forme d'un trou traversant au moins en partie positionné en regard du trou traversant du moyen de réception (70) que comportent la ou les platines (7).

9. Système d'immobilisation réversible (6), selon l'une quelconque des revendications précédentes, **caractérisé par le fait que** l'embase (8) comporte au moins une coulisse, d'une part, recevant intérieurement la ou les platines (7) et, d'autre part, qui est mobile par rapport à cette ou ces platines (7).

10. Système d'immobilisation réversible (6), selon l'une quelconque des revendications précédentes, **caractérisé par le fait qu'**il comporte au moins un moyen de verrouillage (10) pour verrouiller l'embase (8) par rapport à la platine (7) ou aux platines (7), ceci dans une position active ou dans une position inactive d'immobilisation du moyen de maintien (3).

11. Système d'immobilisation réversible (6), selon l'une quelconque des revendications précédentes, **caractérisé par le fait que** l'embase (8) comporte, soit au moins un moyen d'actionnement pour actionner le ou les moyens de serrage (9), soit au moins un moyen de réception (11 ; 11') pour recevoir ce ou ces moyens d'actionnement.

12. Dispositif de transport (1) d'au moins un mur préfabriqué (M) comportant au moins une plaque de béton ou analogue, ce dispositif de transport (1) comportant :
- un moyen de réception (2) pour recevoir le ou les murs préfabriqués (M) ;
- au moins un moyen de maintien (3) pour maintenir ce ou ces murs préfabriqués (M) en position verticale ;
- un support (4) ainsi que des moyens de montage en déplacement (5) pour monter en déplacement ce ou ces moyens de maintien (3) par rapport à ce support (4);
- au moins un système d'immobilisation réversible (6) selon l'une quelconque des revendications précédentes.

13. Dispositif de transport (1) selon la revendication 12, **caractérisé par le fait que** les moyens de montage en déplacement (5) comportent, d'une part, au moins une coulisse (50) que comporte ledit support (4) et, d'autre part, au moins une tige (31), que comportent le ou les moyens de maintien (3), et qui coulisse à l'intérieur de la ou des coulisses (50) tandis que le moyen de réception (70), que comportent la ou les platines (7) du ou des systèmes d'immobilisation réversible (6), reçoit la tige (31) ou une des tiges (31) du ou des moyens de maintien (3).

14. Dispositif de transport (1) selon l'une quelconque des revendications 12 ou 13, **caractérisé par le fait que** le ou les moyens de maintien (3) comportent au moins un moyen d'appui (33) pour prendre appui contre un côté du support (4) tandis que le ou les moyens d'appui (80) que comporte l'embase (8) du ou des systèmes d'immobilisation réversible (6) prennent appui contre un autre côté du support (4), opposé à celui contre lequel prennent appui le ou les moyens d'appui (33) que comportent le ou les moyens de maintien (3).

## Patentansprüche

1. Reversibles System zum Blockieren (6), auf einer Halterung (4) einer Transportvorrichtung (1) für mindestens eine vorgefertigten Mauer (M), eines Mittels (3), um eine solche vorgefertigte Mauer (M) in vertikaler Position zu halten, wobei dieses System (6) Folgendes umfasst:
- mindestens eine Platte (7), die eine Aufnahmeeinrichtung (70) zur Aufnahme des Haltemittels (3) umfasst;
- eine Basis (8), die sich in einer Ebene erstreckt und mindestens ein Stützmittel (80) zum Anlehnen an die Halterung (4) umfasst und relativ zu der Platte (7) oder zu den Platten (7) bewegbar ist;
- mindestens eine Klemmeinrichtung (9) zum Festklemmen, an die Halterung (4), der Basis (8) und/oder des Haltemittels (3),
**dadurch gekennzeichnet, dass** die Klemmeinrichtung (9) das Haltemittel (3) unter der Wirkung einer Verschiebung der Basis (8) relativ zu dieser oder diesen Platten (7) an der Halterung (4) festklemmt.

2. Reversibles Blockiersystem (6) nach Anspruch 1, **dadurch gekennzeichnet, dass** es einerseits eine Vielzahl von Platten (7), relativ zu denen die Basis (8) bewegbar ist, und andererseits eine Vielzahl von Klemmeinrichtungen (9) umfasst, die jeweils einer der Platten (7) zugeordnet und dazu ausgelegt sind, die Festklemmung an der Halterung (4) der Basis (8) und/oder des Haltemittels (3) zu sichern.

3. Reversibles Blockiersystem (6) nach irgendeinem der vorhergehenden Ansprüche, **dadurch gekennzeichnet, dass** die Klemmeinrichtung bzw. -einrichtungen (9) mindestens ein Mittel zur Steuerung der Verschiebung (90) der Platte bzw. Platten (7) relativ zu der Basis (8) umfassen, um unter der Wirkung einer Verschiebung der Basis (8) in einer Richtung parallel zu der Ebene, in der sich diese Basis (8) erstreckt, die Verschiebung dieser Platte bzw. Platten (7) in einer Richtung senkrecht zu dieser Ebene, in der sich die Basis (8) erstreckt, zu steuern.

4. Reversibles Blockiersystem (6) nach Anspruch 3, **dadurch gekennzeichnet, dass** die Basis (8) mindestens eine Fläche (83) aufweist und die Platte bzw. Platten (7) eine Fläche (71) aufweisen, die mit der Fläche bzw. den Flächen (83) der Basis (8) zusammenwirkt, während sich die Fläche bzw. Flächen (83 ; 71) der Basis (8) und/oder der Platte bzw. Platten (7) einerseits in einer Ebene erstrecken, die mit der Ebene, in der sich die Basis (8) erstreckt, einen von Null verschiedenen Winkel einschließt, und andererseits zumindest teilweise das bzw. die Mittel zur Steuerung der Verschiebung (90) bilden.

5. Reversibles Blockiersystem (6) nach Anspruch 4, **dadurch gekennzeichnet, dass** die Basis (8) eine Platte (81) umfasst, die sich in der Ebene erstreckt, in der sich die Basis (8) erstreckt, und einerseits und auf einer Seite dieser Platte (81), die in Richtung auf die Platte bzw. Platten (7) gerichtet ist, die Fläche bzw. Flächen (83) der Basis (8), die mit der bzw. den Flächen (71) der Platte bzw. Platten (7) zusammenwirken, und andererseits und auf der anderen Seite dieser Platte (81) das bzw. die Mittel zum Anlehnen (80) an die Halterung (4) umfasst.

6. Reversibles Blockiersystem (6) nach Anspruch 5, **dadurch gekennzeichnet, dass** die Platte (81) auf der in Richtung auf die Platte bzw. Platten (7) gerichteten Seite mindestens einen Schuh (810) umfasst, der einerseits über die Fläche dieser Platte (81) hervorsteht und sich in Richtung auf die Platte bzw. Platten (7) erstreckt, und andererseits die Fläche bzw. Flächen (83) der Basis (8) umfasst, die mit der bzw. den Flächen (71) der Platte bzw. Platten (7) zusammenwirken.

7. Reversibles Blockiersystem (6) nach irgendeinem der vorhergehenden Ansprüche, **dadurch gekennzeichnet, dass** die Aufnahmeeinrichtung (70), welche die Platte bzw. Platten (7) umfassen, ein Durchgangsloch umfasst.

8. Reversibles Blockiersystem (6) nach Anspruch 7, **dadurch gekennzeichnet, dass** die Basis (8) mindestens eine Aufnahmeeinrichtung (82) zur Aufnahme des Haltemittels (3) umfasst, wobei eine solche Aufnahmevorrichtung (82) die Form eines Durchgangslochs annimmt, das zumindest teilweise gegenüber dem Durchgangsloch der Aufnahmeeinrichtung (70), welche die Platte bzw. Platten (7) umfassen, positioniert ist.

9. Reversibles Blockiersystem (6) nach irgendeinem der vorhergehenden Ansprüche, **dadurch gekennzeichnet, dass** die Basis (8) mindestens eine Gleitschiene umfasst, die einerseits die Platte bzw. Platten (7) innen aufnimmt, und die andererseits relativ zu dieser bzw. diesen Platten (7) bewegbar ist.

10. Reversibles Blockiersystem (6) nach irgendeinem der vorhergehenden Ansprüche, **dadurch gekennzeichnet, dass** es mindestens ein Verriegelungsmittel (10) zum Verriegeln der Basis (8) relativ zu der Platte (7) bzw. den Platten (7) umfasst, und zwar in einer aktiven Position oder in einer inaktiven Position des Blockierens des Haltemittels (3).

11. Reversibles Blockiersystem (6), nach irgendeinem der vorhergehenden Ansprüche, **dadurch gekennzeichnet, dass** die Basis (8) entweder mindestens ein Betätigungsmittel zum Betätigen der Klemmmeinrichtung bzw. -einrichtungen (9) oder mindestens eine Aufnahmeeinrichtung (11; 11') zur Aufnahme dieses bzw. dieser Betätigungsmittel umfasst.

12. Vorrichtung zum Transportieren (1) von mindestens einer vorgefertigten Mauer (M), die mindestens eine Betonplatte oder dergleichen umfasst, wobei diese Transportvorrichtung (1) Folgendes umfasst:
- eine Aufnahmeeinrichtung (2) zur Aufnahme der vorgefertigten Mauer bzw. Mauern (M);
- mindestens ein Haltemittel (3) zum Halten dieser vorgefertigten Mauer bzw. Mauern (M) in einer vertikalen Position;
- eine Halterung (4) sowie verschiebbare Montageeinrichtungen (5) zum verschiebbaren Montieren dieses bzw. dieser Haltemittel (3) relativ zu dieser Halterung (4);
- mindestens ein reversibles Blockiersystem (6) nach irgendeinem der vorhergehenden Ansprüche.

13. Transportvorrichtung (1) nach Anspruch 12, **dadurch gekennzeichnet, dass** die verschiebbaren Montageeinrichtungen (5) einerseits mindestens eine Gleitschiene (50), welche die besagte Halterung (4) umfasst, und andererseits mindestens eine Stange (31), welche das bzw. die Haltemittel (3) umfassen, die in der bzw. den Gleitschienen (50) gleiten, während die Aufnahmeeinrichtung (70), welche die Platte bzw. Platten (7) des bzw. der reversiblen Blockiersysteme (6) umfassen, die Stange (31) bzw. eine der Stangen (31) des bzw. der Haltemittel (3) aufnimmt.

14. Transportvorrichtung (1) nach irgendeinem der Ansprüche 12 oder 13, **dadurch gekennzeichnet, dass** das bzw. die Haltemittel (3) mindestens ein Stützmittel (33) zum Anlehnen an eine Seite der Halterung (4) umfassen, während das bzw. die Stütmittel (80), welche die Basis (8) des bzw. der reversiblen Blockiersysteme (6) umfasst, an eine andere Seite der Halterung (4) anlehnen, die derjenigen, an welche das bzw. die Stützmittel (33), welche das bzw. die Haltemittel (3) umfassen, anlehnen, gegenüberliegt.

## Claims

1. System for reversible immobilization (6), on a support (4) of a device for transporting (1) at least one prefabricated wall (M), of a means for holding (3) such a prefabricated wall (M) in a vertical position, this system (6) including:
- at least one plate (7) including a receiving means (70) for receiving the holding means (3);
- a base (8) extending in a plane, including at least one bearing means (80) for bearing against the support (4), and movable relative to the plate (7) or the plates (7);
- at least one clamping means (9) for clamping, on the support (4), the base (8) and/or the holding means (3),
wherein the clamping means (9) clamps the holding means (3) on the support (4) under the action of a movement of the base (8) relative to this or these plates (7).

2. System for reversible immobilization (6) according to claim 1, wherein it includes, on the one hand, a plurality of plates (7) with respect to which the base (8) is movable and, on the other hand, a plurality of clamping means (9), each associated with one of the plates (7) and designed to ensure the clamping, on the support (4), of the base (8) and/or the holding means (3).

3. System for reversible immobilization (6) according to any one of the preceding claims, wherein the one or several clamping means (9) include at least one means for controlling the movement (90) of the plate or plates (7) relative to the base (8) for controlling, under the action of a movement of the base (8) in a direction parallel to the plane along which this base (8) extends, the movement of this or these plates (7) in a direction perpendicular to this plane along which the base (8) extends.

4. System for reversible immobilization (6) according to claim 3, wherein the base (8) includes at least one surface (83) and the plate or plates (7) include a surface (71), which cooperates with the surface or surfaces (83) of the base (8), while the surface or surfaces (83 ; 71) of the base (8) and/or of the plate or plates (7), on the one hand, extend along a plane forming a non-zero angle with the plane along which the base (8) extends and, on the other hand, form, at least in part, the one or several means for controlling the movement (90).

5. System for reversible immobilization (6) according to claim 4, wherein the base (8) includes a plate (81) extending in the plane along which the base (8) extends and including, on the one hand and on one side of this plate (81) oriented in the direction of the plate or plates (7), the surface or surfaces (83) of the base (8), which cooperate with the surface or surfaces (71) of the plate or plates (7) and, on the other hand and on the other side of this plate (81), the one or several means for bearing (80) against the support (4).

6. System for reversible immobilization (6) according to claim 5, wherein the plate (81) includes, on the side oriented towards the plate or plates (7), at least one shoe (810), on the one hand, protruding from the surface of this plate (81) and extending towards the plate or plates (7) and, on the other hand, including the surface or surfaces (83) of the base (8), which cooperate with the surface or surfaces (71) of the plate or plates (7).

7. System for reversible immobilization (6) according to any one of the preceding claims, wherein the receiving means (70), which the plate or plates (7) include, includes a through hole.

8. System for reversible immobilization (6) according to claim 7, wherein the base (8) includes at least one receiving means (82) for receiving the holding means (3), such a receiving means (82) adopting the shape of a through hole at least partially positioned in front of the through hole of the receiving means (70), which the plate or plates (7) include.

9. System for reversible immobilization (6) according to any one of the preceding claims, wherein the base (8) includes at least one slide, on the one hand, receiving internally the plate or plates (7) and, on the other hand, which is movable relative to this or these plates (7).

10. System for reversible immobilization (6) according to any one of the preceding claims, wherein it includes at least one locking means (10) for locking the base (8) relative to the plate (7) or to the plates (7), in an active position or in an inactive position of immobilization of the holding means (3).

11. System for reversible immobilization (6) according to any one of the preceding claims, wherein the base (8) includes either at least one actuating means for actuating the clamping means (9), or at least one receiving means (11; 11') for receiving this or these actuating means.

12. Device for transporting (1) at least one prefabricated wall (M) including at least one concrete slab or the like, this transport device (1) including:
- a receiving means (2) for receiving the prefabricated wall or walls (M);
- at least one holding means (3) for holding this or these prefabricated walls (M) in a vertical position;
- a support (4) as well as a means for mounting in movement (5) for mounting this or these holding means (3) in movement with respect to this support (4);
- at least one system for reversible immobilization (6) according to any one of the preceding claims.

13. Transport device (1) according to claim 12, wherein the means for mounting in movement (5) include, on the one hand, at least one slide (50), which said support (4) includes, and, on the other hand, at least one rod (31), which the one or several holding means (3) include and which slides inside the slide or slides (50), while the receiving means (70), which the plate or plates (7) of the system or systems for reversible immobilization (6) include, receives the rod (31) or one of the rods (31) of the one or several holding means (3).

14. Transport device (1) according to any one of claims 12 or 13, wherein the one or several holding means (3) include at least one bearing means (33) for bearing against one side of the support (4), while the one or several bearing means (80), which the base (8) of the system or systems for reversible immobilization (6) includes, bear against another side of the support (4), opposite the one against which the one or several bearing means (33), which the holding means (3) include, bear.
